# EUROPEAN PATENT SPECIFICATION

(11) **EP 3 541 254 B1**
(45) Date of publication and mention of the grant of the patent: **02.09.2020**
(21) Application number: 17792082.4
(22) Date of filing: 02.11.2017
(51) Int. Cl.: A47J 43/044, A47J 43/07

(54) **HAND-HELD ELECTRIC MIXER**
ELEKTRISCHER HANDMIXER
MÉLANGEUR MANUEL ÉLECTRIQUE

(30) Priority: 21.11.2016 EP 16199760; 21.11.2016 PL 41956516
(43) Date of publication of application: 25.09.2019
(73) Proprietor: BSH Hausgeräte GmbH, 81739 München (DE)
(72) Inventor: FERUS, Wojciech, 35-604 Rzeszów (PL); LEHMANN, Dariusz, 36-016 Chmielnik (PL)
(86) International application number: PCT/EP2017/078010
(87) International publication number: WO 2018/091272

(56) References cited:
- EP-A1- 0 748 605
- DE-A1- 2 043 610
- DE-U1- 29 604 731
- US-A- 2 797 901
- US-A- 3 275 051

## Description

It is an object of the present invention to provide a hand-held electric mixer provided with working members detached by means of an ejector.

It is known from the US2515755A that a hand-held mixer drives mixing beaters supported by hollow spindles, adapted to attach a mixing beater, and has a worm wheel transmitting the torque from the motor shaft to the mixing beaters. In the working position, the mixing beaters are supported in releasable relationship in the spindles. In this position, a downward axial force upon the beater shaft at its top end accomplishes the declutching and ejection thereof.

It is also known from the US3619754 that a hand-held mixer includes a pair of rotary chucks for releasably engaging mixer member shanks and a pair of oppositely reciprocating coupling channels for releasably engaging corresponding knife blade shanks, a motor, and transmissions connecting the motor to the chucks and coupling channels respectively to rotate and reciprocate them. In the working position, the mixer members are releasably engaged with the chucks. At the other end of the opening, an ejector is provided, which can push against the mixer member shanks, resulting in mixer members being ejected out of the chucks.

DE2043610A1 discloses a hand-held mixer includes an ejector, a pair of spindles for releasably engaging mixer member shanks. In the working position, the mixer members are releasably engaged with the spindles. The ejector and/or the shank ends of the mixer members are formed such that upon actuation of the ejector the beginning of the single displacement and releasement each of the shank ends of the mixer members. It's been achieved by different distances between the shank ends with respect to corresponding to them the pushing portion of the ejector. DE 29604731 U1 shows another example of hand-held mixer with ejector.

From the prior art described above, there are known hand-held mixers with an ejector, which applies an axial force directed towards the working members, such as mixer members, to disengage these members from the mixer. The inconvenience of these solutions is that they do not have protection against accidental swapping the positions of working members.

An object of the invention is the further development of the art, in particular solutions for eliminating the possibility of swapping the positions of working members of a hand-held mixer.

This object is achieved by the technical features described in the characterizing part of the claim 1. Additional technical features and preferred embodiments of the invention are given in the dependent claims.

The foregoing general description and detailed description, given hereafter, are merely exemplary and are understood as additional explanations of the claimed invention. Other advantages and features of the invention result from the following descriptions, drawings and claims.

The hand-held mixer according to the present invention comprises a housing with a drive unit consisting of an electric motor and a gear unit which includes spindles which are adapted to drive at least one working members. The spindles have fastening elements which keep the working members in a fixed position and a toothed ring transmitting the torque from a motor shaft (not shown). The fastening elements which are fastening the working member in the spindle define a mounting plane perpendicular to the spindle axis. The mixer has also an ejector of self-acting return movement, which by means of a first part and a second part of its working surface is used to disengage the working members, wherein the height of the first working part and the height of the second part, as measured above the mounting plane, are different. The ejector has a button protruding above the housing which allows a user of the mixer easily to operate the ejector to disengage the working members from the spindles, for example, for the purpose of cleaning or storage. The spindles have also elements engaging the working member shanks in order to transmit the torque. According to the invention first part of working surfaces and second part of working surface are placed in the bottom, i.e. on the opposite side to button part of the ejector, correspondingly above and near to the respective shank ends of working members. Also, according to the invention the lengths of the working members shanks, from the lugs to their ends are different and when the working members are fixedly fastened in the spindles, the distances respectively between the ends of the first and second working member and the working surface are approximately equal. This solution gives the ability to simultaneously eject, disengage both working members. Advantageously different heights of the working surfaces of the ejector and different lengths of the working member shanks protect against accidental swapping the positions of working members by the user. In a case when a working member is positioned in a wrong spindle, it would not be fixedly fastened due to the fact that the working member shank will be blocked by the working surface of the ejector, thereby making the lug positioned on the working member shank not getting engaged against the fastening element of the spindle, and the working member will not be locked.

In preferred embodiment the ejector can have at least one projection, elongated along its longitudinal axis. The projection front apex defines the first and/or second part of working surface. In this reason it's easier to locate the ejector in the housing because the longitudinal axis of the ejector doesn't have to be approximately in the same plane as the axis of the working tools.

Another preferred embodiment is to form the working surface of the ejector in the form of a plane inclined obliquely to its longitudinal axis. Advantage of this is that it is easier to produce and store such ejector.

Preferably, the openings, which the housing is provided with, for receiving the working members in the spindles, have different diameters, and at least one of the working members is provided with a ring located on its shank at such a distance from its shank end, that when the working members are fixedly fastened in the spindles, this ring is flush with the corresponding opening of the housing. It is also preferred when one of the openings has smaller diameter and the other opening has larger diameter than the diameter of the ring. As a result, the ring can only slide into one of the housing openings.

The ring can be made of metal or plastic.

In another embodiment, the ring is integrated with a toothed wheel, which drives auxiliaries connected to the mixer, for example, when the mixer is mounted on a stand, the torque is transmitted through the engagement of the working member toothed ring to a toothed wheel rim of a rotating bowl.

The present invention relates to a hand-held electric mixer, provided with working members detached by means of an ejector. Different heights of the working surfaces of the ejector and different lengths of the working member shanks protect against accidental swapping the positions of working members by the user. In a case when a working member is positioned in a wrong spindle, it would not be fixedly fastened due to the fact that the working member shank will be blocked by the working surface of the ejector, thereby making the lug positioned on the working member shank not getting engaged against the fastening element of the spindle, and the working member will not be locked. Swapping the positions of working members and, in particular, dough hooks for kneading dough, often made of a metal rod bent in the shape of a coil spring, can lead to moving the dough up the spiral dough hook towards a mixer housing, and further pressing the dough into housing slots and consequently damaging a drive unit.

The construction of the invention, however, together with additional objects and corresponding advantages will be best understood from the following description of specific embodiments and in connection with the accompanying drawings.

Further benefits and advantages of the present invention will become apparent after a careful reading of the detailed description with appropriate reference to the accompanying drawings.

In the drawings:
Fig. 1 shows a cross-section of a ready-to-work mixer.
Fig. 2 shows an ejector of the mixer and correct working members fastened in the spindles (not visible in the figure),
Fig. 3 shows the mixer in a bottom view, mounted with its working members properly fastened,
Fig. 4 shows a cross-section of the mixer with a visible ejector, wherein the working members are incorrectly swapped.

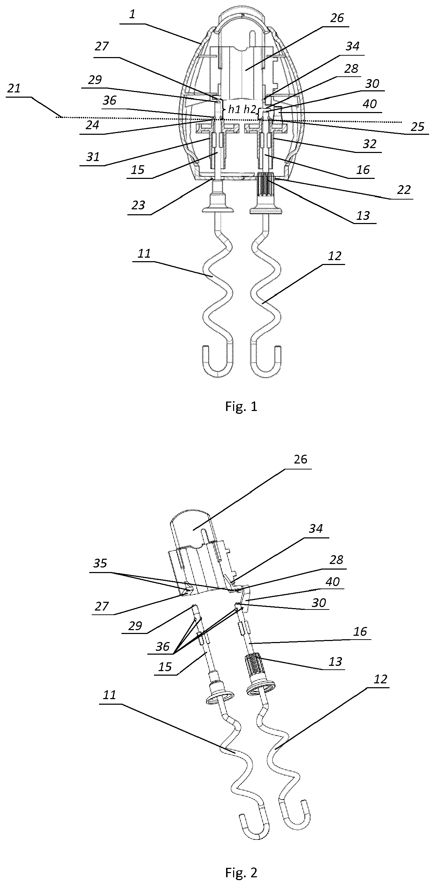

The hand-held electric mixer, shown in Figs. 1 - 3, provided with the housing 1, which includes a drive unit consisting of an electric motor (not shown) and a gear unit, which includes two spindles 31, 32, with fastening elements 24, 25 forming the mounting plane 21 and toothed rings, which allow transmitting the torque from the motor shaft (not shown) to the working members 11, 12. The housing 1 also includes mounted inside an ejector 26, which is positioned vertically in relation to its longitudinal axis, which at one end has a button and at the opposite end has a working surface 35 consisting of its first 27 and second 28 part that have different heights with respect to the mounting plane 21. The ejector 26 has an elongated projection 34, along its longitudinal axis, the face of which forms the second part 28 of the working surface 35. The height, h1 is approximately two times greater than the height, h2. The working members 11, 12 are made of metal rod bent at the end in the shape of a "U", and next they change over their shape to a cylindrical coil spring, wherein the directions of twisting the spring for the working members 11 and 12 are opposite. At the other end of the working members 11, 12, they have shanks 15, 16, each shank having two lugs 36. The shank 15 is longer than the shank 16, within their part from the lugs 36, to their ends 29, 30. The working members 11, 12 are positioned in their appropriate spindles, respectively 31, 32 and fixedly fastened with the lugs 36 held in place by fastening elements 24, 25. The length of the shank 15, within its part from the lugs 36 to its end 29, is smaller than the height h1 and greater than the height h2. While the length of the shank 16, within its part from the lugs 36 to its end 30, is smaller than the height h2. The distances between the working surface 35 and the end 29 and the end 30 are approximately equal. This favours the working members 11 and 12 to be simultaneously unlocked. Having pressed the ejector 26, it is moved towards the working members 11, 12, further pressing on their ends, respectively 29, 30 by the first part 27 and second part 28 of the working surface 35 making them unlocked and putting them out of the spindles 31, 32. A spring 40 retracts the ejector 26 to its starting position. The working member 12 is provided with a ring 13 integrated with a toothed rim to drive auxiliaries. The housing 1 has two openings 23, 22 to receive the working members 11, 12 and the diameter of the opening 23 is smaller than the diameter of the opening 22. On the other hand, the diameter of the ring 13 is smaller than the diameter of the opening 22 and greater than the diameter of the opening 23. The ring 13 is housed inside the opening 22.

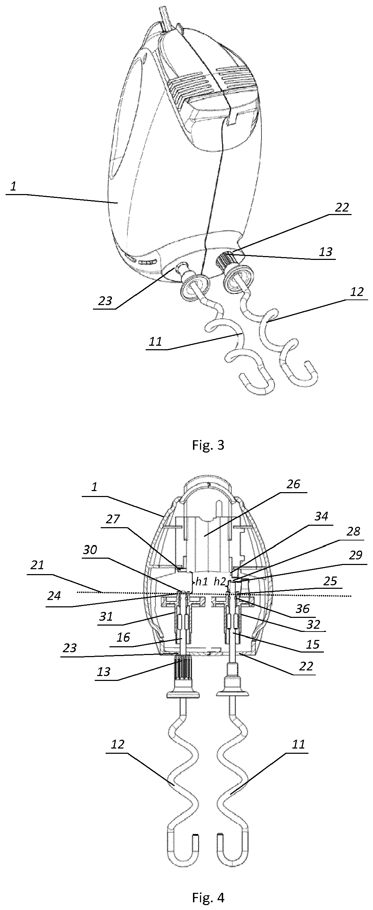

Fig. 4 shows the hand-held mixer, the working members 11, 12 of which are incorrectly swapped, i.e., the second working member 12 is placed in the spindle 31, and the first working member 11 is placed in the spindle 32. In this case, the ring 13 of the second working member 12 abuts against the housing, since its diameter is greater than the diameter of the opening 23, which causes its lugs 36 do not engage with the fastening element 24 with the result that the second working member 12 is not fixedly fastened in the spindle 31. As well as the end 30 of the shank 15 of the first working member 11, abuts against the second part 28 of the working surface 35, because the height h2 is smaller than the length of the shank 15 from the lugs 36 to the end 29, which causes the lugs 36 of the first working member 11 not to reach the fastening element 25. As a result of which the first working member 11 is not fixedly fastened in the spindle 32.

The present invention relates to a hand-held electric mixer, provided with working members detached by means of an ejector. The invention solves the problem of securing the mixer against its operation with its working members swapped. Different heights of the working surface of the ejector and different lengths of the working member shanks prevent the working members from accidental swapping by the user. In the case of an incorrect working member being inserted in a spindle, the member will not be fixedly fastened due to the fact that the shank of this working member will be blocked by the working surface of the ejector, thereby making the lugs on the working member shank not being engaged with the fastening element of the spindle, and the working member will not be locked.

### List of reference signs:

1 - housing
11 - first working member
12 - second working member
13 - ring
15, 16 - shanks
21 - mounting plane
22, 23 - housing openings
24, 25 - fastening elements
26 - ejector
27 - first part of working surface
28 - second part of working surface
29, 30 - shank ends of working members
31, 32 - spindles
34 - longitudinal projection
35 - working surface
36 - lug
h1 - height of a first working member
h2 - height of a second working member

## Claims

1. A hand-held mixer comprising a housing (1) with a drive unit, consisting of an electric motor and a gear unit which includes spindles (31, 32), which are adapted to drive a first working member (11) and a second working member (12), the first and second working member comprising respective shanks and lugs, wherein spindles (31, 32) have a fastening elements (24, 25), that define a mounting plane (21), further the housing (1) is provided with an ejector (26), which is arranged to apply an axial force with a first part (27) and a second part (28) of a working surface (35) on shank ends (29, 30) of the first working member (11) and the second working member (12) to unlock them from the fastening elements (24, 25), wherein a height (h1) of the first part (27) and a height (h2) of the second part (28) with respect to the mounting plane (21) are different, **characterized in that** the lengths of shanks (15, 16) within the part from lugs (36) to the shank ends (29, 30) of the working members (11, 12) are different, and the distances between the shank ends (29, 30) of the first working member (11) and the second working member (12), respectively, and the working surface (35) are approximately equal, when the working members (11, 12) are fixedly fastened in the spindles (31,32) by fastening elements (24, 25).

2. A mixer according to claim 1, **characterized in that** the ejector (26) has at least one elongated projection (34) along its longitudinal axis, the apex of which defines the first part (27) and/or the second part (28) of the working surface (35).

3. A mixer according to claim 1 or 2, **characterized in that** the working surface (35) of the ejector (26) forms a plane, which is inclined obliquely to its longitudinal axis.

4. A mixer according to any one of the preceding claims, **characterized in that** included in the housing (1) and arranged coaxially against the spindles (31, 32), openings (23, 22) are provided, which allow positioning the working members (11, 12) into the spindles (31, 32), said openings having different diameters.

5. A mixer according to any one of the preceding claims, **characterized in that** at least one of the working members (11, 12) is provided with a ring (13).

6. A mixer according to claim 5 **characterized in that** the ring (13) positioned on the shank (16) at such a distance from the shank end (29, 30), that in a case where the working members (11, 12) are fixedly fastened in the spindles (31, 32), the ring (13) is flush with the corresponding opening (23) or (22).

7. A mixer according to claims 5 to 6, **characterized in that** the diameter of the ring (13) is greater than the smaller diameter of one of the openings (23, 22) and smaller than the larger diameter of the other opening (23, 22).

8. A mixer according to claims 5 to 7, **characterized in that** the ring (13) is made of metal or plastic.

9. A mixer according to claims 5 to 8, **characterized in that** the ring (13) is integrated with a toothed wheel driving other mixer auxiliaries.

## Patentansprüche

1. Handmixer mit einem Gehäuse (1) mit einer Antriebseinheit, die aus einem Elektromotor und einer Getriebeeinheit besteht, welche Spindeln (31, 32) aufweist, die so ausgelegt sind, dass sie ein erstes Arbeitselement (11) und ein zweites Arbeitselement (12) antreiben, wobei das erste und das zweite Arbeitselement jeweils eine Achse und Nasen umfassen, wobei Spindeln (31, 32) Befestigungselemente (24, 25) aufweisen, die eine Befestigungsebene (21) definieren, wobei ferner das Gehäuse (1) mit einem Auswerfer (26) versehen ist, der so angeordnet ist, dass er mit einem ersten Teil (27) und einem zweiten Teil (28) einer Arbeitsfläche (35) eine axiale Kraft auf Achsenden (29, 30) des ersten Arbeitselements (11) und des zweiten Arbeitselements (12) ausübt und sie so aus den Befestigungselementen (24, 25) löst, wobei sich eine Höhe (h1) des ersten Teils (27) und eine Höhe (h2) des zweiten Teils (28) in Bezug auf die Befestigungsebene (21) unterscheiden, **dadurch gekennzeichnet, dass** sich die Länge der Achsen (15, 16) in dem Teil von den Nasen (36) bis zu den Achsenden (29, 30) der Arbeitselemente (11, 12) unterscheidet und der Abstand zwischen den Achsenden (29, 30) des ersten Arbeitselements (11) beziehungsweise des zweiten Arbeitselements (12) und der Arbeitsfläche (35) in etwa gleich ist, wenn die Arbeitselemente (11, 12) mit Befestigungselementen (24, 25) in den Spindeln (31, 32) fixiert sind.

2. Mixer nach Anspruch 1, **dadurch gekennzeichnet, dass** der Auswerfer (26) mindestens einen länglichen Vorsprung (34) an seiner Längsachse aufweist, dessen Spitze den ersten Teil (27) und/oder den zweiten Teil (28) der Arbeitsfläche (35) definiert.

3. Mixer nach Anspruch 1 oder 2, **dadurch gekennzeichnet, dass** die Arbeitsfläche (35) des Auswerfers (26) eine Ebene bildet, die schräg zu seiner Längsachse geneigt ist.

4. Mixer nach einem der vorhergehenden Ansprüche, **dadurch gekennzeichnet, dass** sich in dem Gehäuse (1) Öffnungen (23, 22) befinden, die koaxial an den Spindeln (31, 32) angeordnet sind und ein Positionieren der Arbeitselemente (11, 12) in den Spindeln (31, 32) ermöglichen, wobei die Öffnungen einen unterschiedlichen Durchmesser aufweisen.

5. Mixer nach einem der vorhergehenden Ansprüche, **dadurch gekennzeichnet, dass** mindestens eines der Arbeitselemente (11, 12) mit einem Ring (13) versehen ist.

6. Mixer nach Anspruch 5, **dadurch gekennzeichnet, dass** der Ring (13) in einem solchen Abstand zu dem Achsende (29, 30) an der Achse (16) positioniert ist, dass der Ring (13), wenn die Arbeitselemente (11, 12) in den Spindeln (31, 32) fixiert sind, bündig mit der entsprechenden Öffnung (23) oder (22) abschließt.

7. Mixer nach den Ansprüchen 5 bis 6, **dadurch gekennzeichnet, dass** der Durchmesser des Rings (13) größer ist als der kleinere Durchmesser einer der Öffnungen (23, 22) und kleiner als der größere Durchmesser der anderen Öffnung (23, 22).

8. Mixer nach den Ansprüchen 5 bis 7, **dadurch gekennzeichnet, dass** der Ring (13) aus Metall oder Kunststoff hergestellt ist.

9. Mixer nach den Ansprüchen 5 bis 8, **dadurch gekennzeichnet, dass** der Ring (13) in ein Zahnrad integriert ist, das anderes Mixerzubehör antreibt.

## Revendications

1. Batteur à main comprenant un boîtier (1) qui comprend un dispositif d'entraînement composé d'un moteur électrique et d'un réducteur qui inclut des mandrins (31, 32), qui sont adaptés pour entraîner un premier élément de travail (11) et un second élément de travail (12), le premier et le second éléments de travail comprenant des tiges et des ergots respectifs, dans lequel les mandrins (31, 32) possèdent chacun un élément de fixation (24, 25) qui définissent un plan de montage (21), et le boîtier (1) est équipé en outre d'un éjecteur (26) qui est agencé pour appliquer une force axiale avec un premier composant (27) et un second composant (28) d'une surface de travail (35) sur des extrémités de tige (29, 30) du premier élément de travail (11) et du second élément de travail (12) afin de les dégager des éléments de fixation (24, 25), dans lequel une hauteur (h1) du premier composant (27) et une hauteur (h2) du second composant (28) par rapport au plan de montage (21) sont différentes, **caractérisé en ce que** les longueurs des tiges (15, 16), dans la partie allant des ergots (36) jusqu'aux extrémités des tiges (29, 30) des éléments de travail (11, 12) sont différentes, et les distances entre les extrémités des tiges (29, 30) respectives du premier élément de travail (11) et du second élément de travail (12) et la surface de travail (35) sont approximativement égales lorsque les éléments de travail (11, 12) sont fixés à demeure dans les mandrins (31, 32) par des éléments de fixation (24, 25).

2. Batteur selon la revendication 1, **caractérisé en ce que** l'éjecteur (26) possède au moins une saillie allongée (34) le long de son axe longitudinal, dont la pointe définit le premier composant (27) et/ou le second composant (28) de la surface de travail (35).

3. Batteur selon la revendication 1 ou 2, **caractérisé en ce que** la surface de travail (35) de l'éjecteur (26) forme un plan qui est incliné obliquement par rapport à son axe longitudinal.

4. Batteur selon l'une des revendications précédentes, **caractérisé en ce que** des ouvertures (23, 22) inclues dans le boîtier (1) et disposées coaxialement contre les mandrins (31, 32) sont prévues, lesquelles ouvertures permettent un positionnement des éléments de travail (11, 12) dans les mandrins (31, 32), lesdites ouvertures ayant des diamètres différents.

5. Batteur selon l'une des revendications précédentes, **caractérisé en ce qu'**au moins un des éléments de travail (11, 12) est pourvu d'une bague (13).

6. Batteur selon la revendication 5, **caractérisé en ce que** la bague (13) est positionnée sur la tige (16) à une distance de l'extrémité de tige (29, 30) telle que, lorsque les éléments de travail (11, 12) sont fixés à demeure dans les mandrins (31, 32), la bague (13) affleure l'ouverture correspondante (23) ou (22).

7. Batteur selon l'une des revendications 5 à 6, **caractérisé en ce que** le diamètre de la bague (13) est supérieur au diamètre le plus petit de l'une des ouvertures (23, 22) et inférieur au diamètre le plus grand de l'autre ouverture (23, 22).

8. Batteur selon l'une des revendications 5 à 7, **caractérisé en ce que** la bague (13) est constituée de métal ou de plastique.

9. Batteur selon l'une des revendications 5 à 8, **caractérisé en ce que** la bague (13) est intégrée à une roue dentée entraînant d'autres accessoires de batteur.
